# EUROPÄISCHE PATENTSCHRIFT

(11) **EP 3 586 167 B1**
(45) Veröffentlichungstag und Bekanntmachung des Hinweises auf die Patenterteilung: **27.10.2021**
(21) Anmeldenummer: 18700092.2
(22) Anmeldetag: 04.01.2018
(51) Int. Cl.: G01S 19/07, G01S 19/08

(54) **VERFAHREN ZUR BESTIMMUNG EINER ELEKTRONENDICHTEVERTEILUNG IN DER ERDATMOSPHÄRE**
METHOD FOR DETERMINING AN ELECTRON DENSITY DISTRIBUTION IN THE EARTH'S ATMOSPHERE
PROCÉDÉ DE DÉTERMINATION D'UNE DISTRIBUTION DE DENSITÉ ÉLECTRONIQUE DANS L'ATMOSPHÈRE TERRESTRE

(30) Priorität: 22.02.2017 DE 102017202844; 20.03.2017 DE 102017204580
(43) Veröffentlichungstag der Anmeldung: 01.01.2020
(73) Patentinhaber: Robert Bosch GmbH, 70442 Stuttgart (DE)
(72) Erfinder: LANGER, Markus, 71679 Asperg (DE); LIMBERGER, Marco, 71638 Ludwigsburg (DE)
(86) Internationale Anmeldenummer: PCT/EP2018/050163
(87) Internationale Veröffentlichungsnummer: WO 2018/153553

(56) Entgegenhaltungen:
- US-A- 5 828 336
- ANTONIO ANGRISANO ET AL: "Benefit of the NeQuick Galileo Version in GNSS Single-Point Positioning", INTERNATIONAL JOURNAL OF NAVIGATION AND OBSERVATION, Bd. 2013, 1. Januar 2013 (2013-01-01), Seiten 1-11, XP055464692, US ISSN: 1687-5990, DOI: 10.1155/2013/302947
- COLOMBO OSCAR L ET AL: "Extending Wide Area and Virtual Reference Station Networks Far Into the Sea With GPS Buoys", GNSS 2005 - PROCEEDINGS OF THE 18TH INTERNATIONAL TECHNICAL MEETING OF THE SATELLITE DIVISION OF THE INSTITUTE OF NAVIGATION (ION GNSS 2005), THE INSTITUTE OF NAVIGATION, 8551 RIXLEW LANE SUITE 360 MANASSAS, VA 20109, USA, 16. September 2005 (2005-09-16), Seiten 560-572, XP056009605,
- PSIAKI MARK L ET AL: "Nonlinear Estimation to Assimilate GPS TEC Data into a Regional Ionosphere Model", GNSS 2015 - PROCEEDINGS OF THE 28TH INTERNATIONAL TECHNICAL MEETING OF THE SATELLITE DIVISION OF THE INSTITUTE OF NAVIGATION (ION GNSS+ 2015), THE INSTITUTE OF NAVIGATION, 8551 RIXLEW LANESUITE 360MANASSAS, VA 20109, USA, 18. September 2015 (2015-09-18), Seiten 3497-3510, XP056010893,
- NAVA B ET AL: "A new version of the NeQuick ionosphere electron density model", JOURNAL OF ATMOSPHERIC AND SOLAR-TERRESTRIAL PHYSICS, PERGAMON, AMSTERDAM, NL, Bd. 70, Nr. 15, 1. Dezember 2008 (2008-12-01), Seiten 1856-1862, XP025805261, ISSN: 1364-6826, DOI: 10.1016/J.JASTP.2008.01.015 [gefunden am 2008-02-05]

## Beschreibung

### Stand der Technik

Die Erfindung betrifft ein Verfahren zur Bestimmung einer Elektronendichteverteilung in der Erdatmosphäre.

Als Ionosphäre wird ein Bereich der (Hoch-) Erdatmosphäre beschrieben, der sich ungefähr zwischen 50 km und 1000 km Höhe erstreckt und oberhalb in die Plasmasphäre übergeht. Die Ionosphäre zeichnet sich durch eine erhöhte Konzentration an geladenen Partikeln, wie etwa Ionen und freien Elektronen aus, die durch lonisationsprozesse in Abhängigkeit von der solaren Einstrahlung entsteht. Abhängig von der Frequenz und Stärke der Ionisation werden elektromagnetische Signale in der Ionosphäre gebrochen. Dadurch entstehen Signalverzögerungen in den Beobachtungen Globaler Satellitennavigationssysteme (GNSS), wie beispielsweise dem amerikanischen System GPS oder dem europäischen Galileo, welche zu den Hauptfehlerquellen bei Positionierungs- und Navigationsanwendungen zählen. Bei der Verwendung von teuren, geodätischen Zweifrequenz-Sigenalempfängern können Signalkombinationen angewendet werden um den lonosphäreneinfluss erster Ordnung zu eliminieren. Wesentlich preisgünstigere Einfrequenz-Signalempfänger müssen zwangsläufig auf Atmosphärenmodelle zurückgreifen, um die Signale zu korrigieren und Genauigkeiten < 1 m zu erreichen.

Zur Korrektur des lonosphäreneinflusses bei beispielsweise Positionierungs- und Navigationsanwendungen wird regelmäßig die integrierte Elektronendichte, der sog. Gesamtelektroneninhalt (engl.: Total Electron Content; kurz: TEC), als Korrekturparameter genutzt. Dieser TEC kann in Abhängigkeit der geographischen Länge, geographischen Breite und der Zeit in einem Atmosphärenmodell eines Einfrequenz-Signalempfängers hinterlegt sein. Zur Bereitstellung der ort- und zeitabhängigen TEC-Daten werden Referenzmessungen mit teuren, geodätischen Zweifrequenz-Signalempfängern durchgeführt, da der TEC aus Zweifrequenz-GNSS-Beobachtungen extrahiert werden kann. Aufgrund der geringen Anzahl von und großen Distanz zwischen entsprechenden Referenzstationen ist die Auflösung der so bestimmten TEC-Daten jedoch sehr gering.

Aus COLOMBO OSCAR L ET AL, "Extending Wide Area and Virtual Reference Station Networks Far Into the Sea With GPS Buoys", GNSS 2005 - PROCEEDINGS OF THE 18TH INTERNATIONAL TECHNICAL MEETING OF THE SATELLITE DIVISION OF THE INSTITUTE OF NAVIGATION (ION GNSS 2005), THE INSTITUTE OF NAVIGATION, 8551 RIXLEW LANE SUITE 360 MANASSAS, VA 20109, USA, (20050916), Seiten 560 - 572, ist ein Verfahren zur Bestimmung einer Elektronendichteverteilung in der Erdatmosphäre mit Hilfe von Bojen bekannt.

### Offenbarung der Erfindung

Hier vorgeschlagen wird gemäß Anspruch 1 ein Verfahren zur Bestimmung einer Elektronendichteverteilung in der Erdatmosphäre. Die Elektronendichteverteilung wird bei dem Verfahren in Form eines vierdimensionalen lonosphärenmodells bereitgestellt. Die Elektronendichteverteilung wird dazu genutzt, Laufzeitmessungen von Signalen, die von Satelliten ausgesendet werden, für Positionsbestimmungen mit Signalempfängern zu korrigieren.

Ein vierdimensionales lonosphärenmodell zeichnet sich insbesondere dadurch aus, dass eine Bestimmung einer Elektronendichte in vier Dimensionen (drei räumlichen Dimensionen und eine zeitliche Dimension) möglich ist.

Die (lokale) Elektronendichte in der Ionosphäre steht in einem engen Zusammenhang zu einer (lokalen) lonendichte in der Ionosphäre. Gegebenenfalls sind beide Werte identisch oder proporotional. Daher wird zur Beschreibung der Ionosphäre je nach Zusammenhang auf die Elektronendichte oder auf die lonendichte zurück gegriffen.

In Schritt a) kann beispielsweise eine sog. Chapman-Funktion oder eine sog. Epstein-Funktion als Verteilungsfunktion dienen. Die Verteilungsfunktion kann durch ein Modell, wie etwa ein Atmosphären- bzw. nosphärenmodell, bei dem und/oder im Zusammenhang mit dem das Verfahren verwendet wird, festgelegt sein. Diese Funktionen bieten jeweils eine Schätzung der Verteilung der Elektronendichte in Abhängigkeit der Höhe. Zur Schätzung dieser Verteilung benötigen diese Funktionen mindestens einen Funktionsparameter. Die Chapman-Funktion umfasst beispielsweise exponentielle Funktionsanteile und kann zur Beschreibung der vertikalen Elektronendichteverteilung verwendet werden. Die Chapman-Funktion hat beispielsweise mindestens drei Funktionsparameter, nämlich die maximale Elektronendichte entlang der Höhe, die Höhe auf der diese maximale Elektronendichte auftritt sowie die zugehörige Skalenhöhe. Liegen diese Funktionsparameter in Abhängigkeit der geodätischen Länge, der geodätischen Breite und der Zeit vor, kann die Chapman-Funktion zur Bestimmung einer Elektronendichte in einer bestimmten Höhe verwendet werden. So ist ein vierdimensionales Elektronendichtemodell gebildet. Die Chapman-Funktion kann durch Schätzung der zeitlich-räumlichen Veränderung der Funktionsparameter zum zeitabhängigen Beschreiben der Ionen- bzw. Elektronendichteverteilung in allen drei Raumrichtungen genutzt werden. Die Verwendung der Chapman-Funktion oder der Epstein-Funktion hat gegenüber klassischen TEC basierten Verfahren zur Definition eines Modells einer lonenverteilung bzw. Elektronenverteilung in der Atmosphäre insbesondere den Vorteil, dass ein tomografischer Blick auf die räumliche Ionen- bzw. Elektronendichteverteilung und insbesondere auf Auswirkungen von Störungen in der vertikalen Atmosphärenstruktur bzw. lonosphärenstruktur möglich wird. In klassischen Verfahren wird der TEC, d. h. die integrierte Elektronendichte für geografische Länge, geografische Breite und Zeit, jedoch ohne Höhenbezug, bestimmt. Darüber hinaus sind für jede geodätische Position und jeden Zeitpunkt, für die eine Elektronendichte definiert werden soll, in einem vierdimensionalen lonosphärenmodell durch die Profilfunktion nur eine geringe Anzahl an Parametern (z.B. drei für die Chapman Funktion) notwendig.

Die in den Schritten b) und c) ermittelten Parameter können insbesondere TECs (engl.: Total Electron Content; kurz: TEC) sein oder Parameter, die einen direkten Rückschluss auf TECs zulassen. Zur Ermittlung der (ersten und zweiten) Parameter können die Zweifrequenz-Signalempfänger sogenannte Code- und Trägerphasenmessungen von Navigationssatelliten auf zwei Frequenzen aufzeichnen. Beispielsweise handelt es sich beim GPS-System um die Frequenzen L1 (1575.42 MHz) und L2 (1227.60 MHz). Durch Differenzbildung der Signale (z. B. L1 - L2) lassen sich Fehlerterme, die sich auf beiden Frequenzen gleich auswirken, eliminieren. Man spricht hierbei von der geometriefreien Linearkombination. Der Einfluss der Ionosphäre auf die Signalausbreitung ist jedoch dispersiv, d. h. der Einfluss ist unterschiedlich auf beiden Frequenzen. Durch bekannte mathematische Verfahren lässt sich aus dieser Eigenschaft der TEC berechnen. Da der TEC die integrierte Elektronendichte entlang des Signalweges ist, beinhaltet er Informationen über die Elektronendichteverteilung.

Die Zweifrequenz-Signalempfänger, die in Schritt b) verwendet werden, können stationär (GNSS Empfangsstationen) oder beweglich (GNSS Empfänger auf Fahrzeugen) sein. So wird eine Vielzahl von ersten Parametern an unterschiedlichen örtlichen Positionen ermittelt.

Weiterhin bevorzugt ist die Kombination der in Schritt b) verwendeten Zweifrequenz-Signalempfänger in und/oder an (Kraft-) Fahrzeugen sowie statischen Referenzstationen. Wenn die Zweifrequenz-Signalempfänger in und/oder an (Kraft-) Fahrzeugen angeordnet sind, so können zusätzlich Fahrzeugdaten und/oder fahrzeugbasierte GNSS-Daten zum Ermitteln der Parameter herangezogen werden. Die Verwendung fahrzeugbasierter Zweifrequenzsignalempfänger bietet den besonderen Vorteil, dass eine ausreichende zeitliche und räumliche Abdeckung zur Bestimmung der Funktionsparameter erzielt werden kann und keine zusätzlichen Maßnahmen notwendig sind, die Zweifrequenz-Signalempfänger an verschiedenen Orten zu positionieren. Durch die Anordnung in einem Kraftfahrzeug findet ein regelmäßiger Ortswechsel der Zweifrequenz-Signalempfänger statt. So wird eine optimale Abdeckung erzielt, welche allein mit stationären Zweifrequenzsignalempfänger nicht erreichbar wäre.

Bevorzugt werden in Schritt b) zusätzlich Parameter aus einer Mehrzahl von stationären Zweifrequenz-Signalempfänger Messstationen verwendet. Dies bedeutet mit anderen Worten insbesondere, dass die stationären Zweifrequenz-Signalempfänger in oder an Messstationen verortet sind, die jeweils an einer bekannten und festen Position im geodätischen Koordinatensystem angeordnet sind. Entsprechende Messstationen werden auch als Referenzstationen bezeichnet.

Vorzugsweise wird in Schritt b) jeweils eine Ausrichtung von Signallaufwegen schräg zu einer senkrechten Richtung ausgewertet. Mit anderen Worten ausgedrückt, werden in den Schritten b) und c) zusätzlich zu den Laufzeitmessungen entlang der Signallaufwege auch die Ausrichtungen beziehungsweise die räumlichen Lagen und/oder Erstreckungen der Signallaufwege ermittelt. Sind die Ausrichtungen der Signallaufwege bekannt, können entlang der schrägen oder geneigten Signallaufwege ermittelte Gesamtmengen von Ionen (sog. geneigter TEC; engl.: slant Total Electron Content, kurz sTEC) in Gesamtmengen von Ionen bzw. Elektronen entlang einer vertikalen Richtung (sog. vertikaler TEC; engl.: vertical Total Electron Content, kurz: vTEC) umgerechnet werden. Entsprechende Umrechnungsbeziehungsweise Transformationsverfahren sind bekannt. Der vertikale TEC wird regelmäßig lediglich als TEC bezeichnet.

Wenn ein Satellit unmittelbar über einem Empfänger angeordnet ist, dann durchläuft ein von diesem Empfänger empfangenes Signal dieses Satelliten genau die lonenverteilung bzw. Elektronenverteilung entlang der Höhe der Atmosphäre unmittelbar über dem Empfänger. Ein (erster oder zweiter) Parameter wäre dann unmittelbar für die Elektronendichteverteilung an beziehungsweise über der Position des Empfängers repräsentativ.

In der Praxis kommt es allerdings sehr selten vor, dass Bestimmungen von (ersten oder zweiten) Parametern mit Satelliten möglich sind, die sich unmittelbar über den jeweiligen Empfängern befinden. Meistens befinden sich die zur Verfügung stehenden Satelliten, von denen Signale empfangen werden, schräg über dem jeweiligen Empfänger, so dass Signallaufwege von den Satelliten zu den Empfängern schräg zu einer senkrechten Richtung (das heißt in einem Winkel zu einer senkrechten Richtung) ausgerichtet sind. Dann durchlaufen Signale entlang des jeweiligen Signallaufwegs verschiedene Höhenbereiche der Ionosphäre an verschiedenen geodätischen Positionen. Aus einer großen Anzahl von Parametern, die für die Gesamtmenge von Ionen bzw. Elektronen entlang derartiger schräger Signallaufwege repräsentativ sind, kann ein Gleichungssystem aufgebaut werden, welches Rückschlüsse auf die höhenbezogene lonenverteilung an verschiedenen geodätischen Positionen ermöglicht und aus welchem das Modell einer lonenverteilung bzw. Elektronenverteilung (bzw. Funktionsparameter von Verteilungsfunktionen eines Modells einer lonenverteilung bzw. Elektronenverteilung) bestimmt werden kann.

Wird als Verteilungsfunktion die Chapman-Funktion festgelegt, so können die in Schritt d) ermittelten ort- und zeitabhängigen Funktionsparameter zumindest folgende Parameter umfassen:
- maximale Elektronendichte entlang der Höhe,
- die Höhe auf der diese maximale Elektronendichte auftritt, und
- die zugehörige Skalenhöhe.

Die Funktionsparameter werden vorzugsweise in Reihenentwicklungen mathematischer räumlich-zeitlicher Basisfunktionen mit sog. Modellkoeffizienten entwickelt. Die Funktionsparameter können jedoch auch (direkt) mit den ersten Parametern und den zweiten Parametern geschätzt werden. Entsprechende Schätzverfahren sind insbesondere für die Anwendung von Chapman- oder Epstein-Funktionen bekannt. Bevorzugt werden die Funktionsparameter durch mathematische Basisfunktionen parametrisiert, z. B. über Kugelflächenfunktionen, so dass eine flächendeckende Darstellung derselben möglich ist.

In Schritt d) können die in Schritt c) ermittelten Funktionsparameter in einem Atmosphären- bzw. nosphärenmodell, insbesondere einem vierdimensionalen Elektronendichtemodell, bereitgestellt werden. Das Modell kann in einer Auswerteeinheit eines Fahrzeugs hinterlegt sein, die zur Korrektur von Positionsdaten dient. Bevorzugt ist das Modell in einer Auswerte- bzw. Recheneinheit eines Datenzentrums hinterlegt, in dem die Modellbildung zentral erfolgt. Das Modell kann dann über Netzwerke (beispielsweise über ein Mobilfunknetz) für Einfrequenz-Signalempfänger bereitgestellt werden.

Erfolgt das Ermitteln von ort- und zeitabhängigen Funktionsparametern für die Verteilungsfunktion gemäß Schritt d) empfängerseitig, so können die in Schritt d) berechneten Funktionsparameter dem Datenzentrum beispielsweise über eine Kabelverbindung (stationäre Empfänger), eine Funkverbindung und/oder eine Satellitenverbindung übermittelt werden.

Bevorzugt erfolgt das Berechnen von ort- und zeitabhängigen Funktionsparametern für die Verteilungsfunktion gemäß Schritt c) in dem Datenzentrum. So können die in dem Schritt b) ermitteln (ersten und zweiten) Parameter dem Datenzentrum beispielsweise über eine Kabelverbindung (stationäre Empfänger), eine Funkverbindung und/oder eine Satellitenverbindung übermittelt werden.

Ein vierdimensionales Elektronendichtemodell bietet den besonderen Vorteil, dass es insbesondere hinsichtlich Konfidenz und Integrität einen deutlichen Mehrwert für sicherheitskritische GNSS Anwendungen ermöglicht. Bei dem vierdimensionalen Elektronendichtemodell wird die Elektronendichte in Abhängigkeit der (geodätischen) Länge, Breite, Höhe und der Zeit modelliert. Neben der ionosphärischen Klimatologie, d. h. periodischen Effekten, wie Variation der Ionosphärenaktivität mit dem solaren 11-Jahres Zyklus, jährliche und saisonale Variationen und/oder tageszeitliche Variation lassen sich in dem vierdimensionalen Elektronendichtemodell in vorteilhafter Weise auch hochdynamische, irreguläre Phänomene wie (Medium and Large Scale) Traveling lonospheric Disturbances (TIDs, MSTIDs, LSTIDs), Sudden lonospheric Disturbances (SIDs), Spread F-Layer, sporadische E-Layer, lonosphärenstürme und/oder Scintillationen in einer Profilstruktur abbilden. Solche Phänomene sind im TEC für einen Laufweg lediglich als Gradient erfassbar. Durch die Zusammenführung von einer Vielzahl von Daten in Schritt c) können solche Phänomene erfasst werden. Ferner erlaubt das vierdimensionale Modell eine Zuordnung der Störquellen in die unterschiedlichen Höhenbereich der Ionosphäre (D-, E-, F-Layer).

Nach einer vorteilhaften Ausgestaltung wird vorgeschlagen, dass in einem weiteren Schritt e) durch eine Integration der mindestens einen Verteilungsfunktion ein ort- und zeitabhängiger Gesamtelektroneninhalt berechnet wird. Die Integration kann hierbei entlang eines Signallaufwegs oder entlang einer Vertikalen erfolgen. Bevorzugt erfolgt die Integration zwischen einer Anfangshöhe und einer Endhöhe einer Atmosphären- bzw. Ionosphärenschicht. Als Integrationsverfahren kann beispielsweise ein Raytracing-Verfahren und/oder ein Gauss-Legendre-Verfahren dienen. Der Schritt e) kann empfängerseitig oder in dem Datenzentrum ausgeübt werden.

Nach einer weiteren vorteilhaften Ausgestaltung wird vorgeschlagen, dass mit bzw. aus dem insbesondere vierdimensionalen Modell der lonenverteilung bzw. Elektronenverteilung Korrekturdaten, insbesondere TEC-Daten, ermittelt werden, die einer Mehrzahl von insbesondere bewegbaren oder bewegten Einfrequenz-Signalempfängern bereitgestellt werden. Die Korrekturdaten können in dem Datenzentrum ermittelt und einer Mehrzahl von Einfrequenz-Signalempfängern beispielsweise über eine Funkverbindung und/oder eine Satellitenverbindung übermittelt werden. Insbesondere ist es möglich, Korrekturdaten ortsabhängig bereitzustellen. Es ist nicht notwendig, jedem Einfrequenz-Signalempfänger das vollständige vierdimensionale lonosphärenmodell bereitzustellen. Vielmehr ist es ausreichend, für eine bestimmte Position und einen bestimmten Zeitpunkt Korrekturdaten bereitzustellen. Gegebenenfalls ist es auch möglich, Korrekturdaten für eine einzelne Messung im Rahmen einer Positionsbestimmung direkt mit dem Satelliten bereitzustellen, mit dem die jeweilige Messung im Rahmen einer Positionsbestimmung durchgeführt wird. Die Einfrequenz-Signalempfänger können beispielsweise an oder in (Kraft-) Fahrzeugen (ohne Zweifrequenz-Signalempfänger), Schiffen, Bojen, landwirtschaftlichen Geräten oder Maschinen, tragbaren GNSS-Empfängern, Mobiltelefonen oder anderen Elektronikartikeln angeordnet sein. Besonders bevorzugt sind die bewegbaren Einfrequenz-Signalempfängern in oder an (autonom betreibbaren) Fahrzeugen angeordnet. Mit den auf Basis des insbesondere vierdimensionalen Modells der lonenverteilung bzw. Elektronenverteilung ermittelten Korrekturdaten können in den Einfrequenz-Signalempfängern hinterlegte lonosphärenmodelle korrigiert beziehungsweise aktualisiert werden.

Des Weiteren lassen Modellanalysen, z.B. in den Datenzentren, Rückschlüsse auf mögliche ionosphärische Störungen zu, welche beispielsweise in Form von Qualitätsindikatoren an den Nutzer als Integritätsmaß übertragen werden können. Diese zusätzliche Integritätsinformation liefert insbesondere bei sicherheitskritischen Anwendungen einen signifikanten Mehrwert.

Nach einem weiteren Aspekt wird eine Verwendung von bewegbaren bzw. bewegten Zweifrequenz-Signalempfängern zur Bestimmung eines vierdimensionalen lonosphärenmodells vorgeschlagen. Gegebenenfalls können zusätzlich auch stationäre, ortsfeste Zweifrequenz-Signalempfänger zur Bestimmung des vierdimensionalen lonosphärenmodells verwendet werden. Bei dem lonosphärenmodell kann es sich um ein Elektronendichtemodell handeln, das vorzugsweise eine vierdimensionale lonen- und/oder Elektronendichteverteilung in der Erdatmosphäre bzw. Ionosphäre beschreibt. Vorzugsweise wird das vierdimensionale lonosphärenmodell genutzt, um in insbesondere bewegbaren bzw. bewegten Einfrequenz-Signalempfängern hinterlegte lonosphärenmodelle zu korrigieren beziehungsweise zu aktualisieren. Besonders bevorzugt sind die bewegbaren Einfrequenz-Signalempfänger in oder an (autonom betreibbaren) Fahrzeugen angeordnet.

Erfindungsgemäß werden die bewegbaren Zweifrequenz-Signalempfänger in oder an Fahrzeugen angeordnet.

Die Anordnung der Zweifrequenz-Signalempfänger in oder an Fahrzeugen hat unter anderem den Vorteil, dass die Zweifrequenz-Signalempfänger in oder an Fahrzeugen sich während des regulären Betriebs der Fahrzeuge auf Straßen befinden. Zweck des bereitgestellten lonosphärenmodells ist es insbesondere die Genauigkeit von Einfrequenz-Signalempfängern zu erhöhen, die in Fahrzeugen eingesetzt werden. Fahrzeuge werden grundsätzlich am meisten bzw. regulär auf der Straße betrieben. Durch die Verwendung von bewegbaren Zweifrequenz-Signalempfängern in oder an Fahrzeugen wird erreicht, dass die Funktionsparameter des lonosphärenmodells mit Daten gewonnen werden, die genau an den Orten ermittelt wurden an denen das lonosphärenmodell später auch zur Positionsbestimmung eingesetzt wird. Genau an diesen Orten erreicht das mit dem hier beschriebenen Weg erstellte lonosphärenmodell eine besonders hohe Genauigkeit.

Darüber hinaus kann die Anordnung von Zweifrequenz-Signalempfängern in oder an Fahrzeugen vorteilhaft sein, weil Fahrzeuge gegebenenfalls eine besonders kostengünstige Plattform für solche Zweifrequenz-Signalempfänger bilden. Gegebenenfalls Fahrzeuge als Plattform hier auch kostengünstiger als extra für die Anordnung von Zweifrequenz-Signalempfängern gemietete oder geleaste Standorte.

Die im Zusammenhang mit dem Verfahren erörterten Details, Merkmale und vorteilhaften Ausgestaltungen können entsprechend auch bei dem hier vorgestellten Verfahren auftreten und umgekehrt. Insoweit wird auf die dortigen Ausführungen zur näheren Charakterisierung der Merkmale vollumfänglich Bezug genommen.

Hier auch beschrieben werden sollen eine Vorrichtung zur Durchführung des beschriebenen Verfahrens sowie ein entsprechendes Computerprogramm und ein maschinenlesbares Speichermedium auf dem dieses Computerprogramm gespeichert ist. Eine Vorrichtung zur Durchführung des beschriebenen Verfahrens ist üblicherweise in einem Rechenzentrum oder einer ähnlichen Struktur implementiert. Hier werden lokale Elektronendichtedaten aus Laufzeitmessungen nach dem beschriebenen Verfahren empfangen und verarbeitet.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Es zeigen schematisch:
- Fig. 1:: eine Darstellung eines Elektronendichteprofils der Ionosphäre,
- Fig. 2:: einen beispielhaften Modellaufbau eines lonosphärenmodells, bei dem das hier vorgestellte Verfahren verwendet wird, und
- Fig. 3:: einen beispielhaften Signallaufweg eines Signals von einem Satelliten an einen Empfänger.

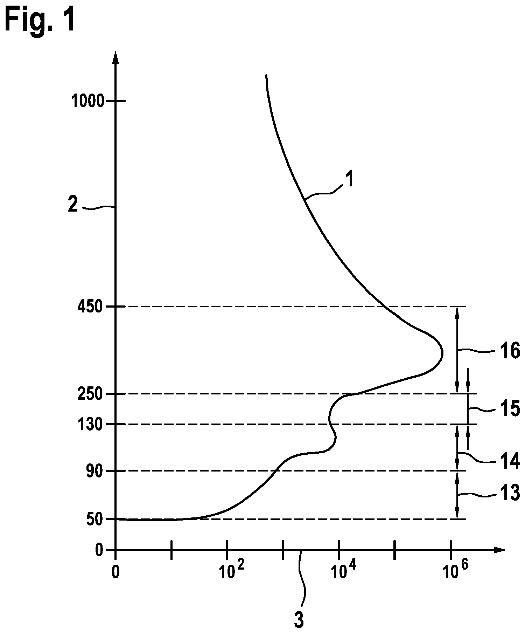

Fig. 1 zeigt schematisch eine Darstellung eines Elektronendichteprofils 1 der Ionosphäre. Auf der Abszissenachse ist die Elektronendichte 3 in Elektronen pro Kubikzentimeter und auf der Ordinatenachse die Höhe 2 in Kilometern aufgetragen. Abhängig von der Elektronendichte und Höhe werden dabei die Schichten D-Layer 13, E-Layer 14 F1-Layer 15 und F2-Layer 16 unterschieden. Es ist erkennbar, dass die Elektronendichte im F2-Layer 16 am größten ist, sodass der F2-Layer 16 den größten Einfluss auf die Signalausbreitung durch die Ionosphäre hat.

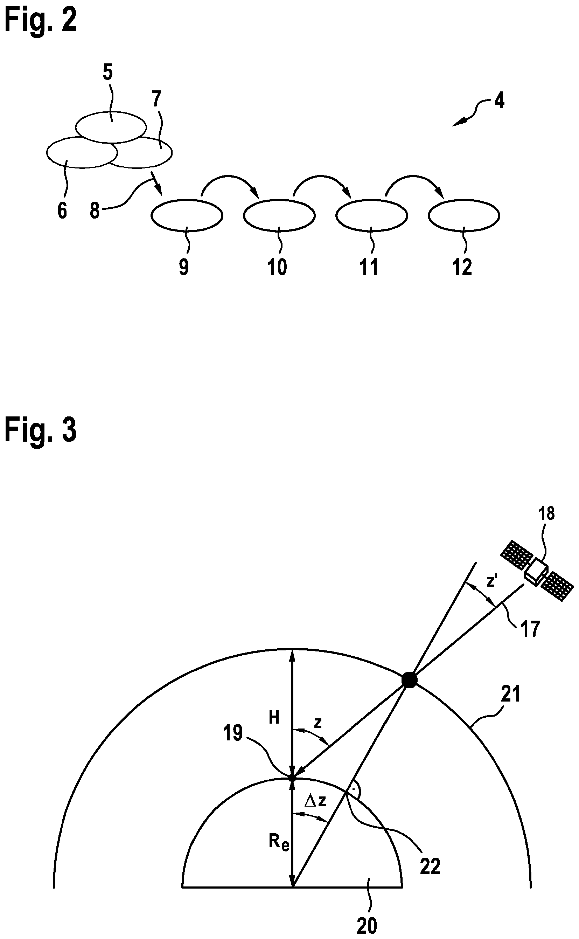

Fig. 2 zeigt schematisch einen beispielhaften Modellaufbau eines lonosphärenmodells 4, bei dem das hier vorgestellte Verfahren verwendet wird. Hierbei wird das Verfahren beispielhaft zur Bestimmung der Elektronendichteverteilung in der Ionosphäre genutzt, wobei die in Abhängigkeit der Höhe bestimmte Elektronendichte darüber hinaus zur Bestimmung des (ortsabhängigen) TEC verwendet wird. Fig. 2 veranschaulicht hierzu den Zusammenhang zwischen den einzelnen Berechnungsschritten des lonosphärenmodells 4 zur Bestimmung der Elektronendichteverteilung und des TEC, ausgehend von GNSS Beobachtungen.

Als Eingangsgrößen werden dem lonosphärenmodell 4 Beobachtungsgrößen aus GNSS Beobachtungen zugeführt. Im Sinne des hier vorgestellten Verfahrens umfassen die Beobachtungsgrößen nicht nur erste Parameter 5, die mit einer Mehrzahl von ortsfesten Zweifrequenz-Signalempfängern ermittelt werden, sondern auch zweite Parameter 6, die mit einer Mehrzahl von Zweifrequenz-Signalempfängern ermittelt werden, die bewegbar sind und hierzu in oder an Fahrzeugen angeordnet sein können. Darüber hinaus können weitere GNSS Beobachtungen 7 genutzt werden, um eine Beobachtungsmodellierung auf Basis der ersten Parameter 5 und zweiten Parameter 6 weiter zu verbessern. Der besondere Vorteil des Verfahrens besteht hier darin, dass sowohl ortsfeste Zweifrequenz-Signalempfänger, als auch bewegbare Zweifrequenz-Signalempfängern genutzt werden, sodass dem lonosphärenmodell 4 ein sehr dichtes GNSS Beobachtungsnetz mit hoher Sensitivität für die Modellparameter zugrunde liegt.

Beispielhaft werden hier im Rahmen einer Beobachtungsmodellierung 8 mittels der Beobachtungsgrößen, jedenfalls mittels der ermittelten ersten Parameter 5 und zweiten Parameter 6, Modellkoeffizienten 9 geschätzt.

Die Modellparameter können einem GNSS Nutzer zur Korrektur des lonosphäreneinflusses bereitgestellt werden.

Auf Basis der Modellkoeffizienten 9 können ort- und zeitabhängige Funktionsparameter 10 für die Beschreibung einer Verteilungsfunktion des lonosphärenmodells 4 geschätzt werden. Als Verteilungsfunktion nutzt das lonosphärenmodell 4 hier beispielhaft die Chapman-Funktion. Somit umfassen die ort- und zeitabhängigen Funktionsparameter 10 zumindest die maximale Elektronendichte entlang der Höhe, die Höhe auf der diese maximale Elektronendichte auftritt sowie die zugehörige Skalenhöhe. Diese drei Funktionsparameter 10 werden in Abhängigkeit von der geodätischen Länge, geodätischen Breite und in Abhängigkeit der Zeit geschätzt.

Die Funktionsparameter können einem GNSS Nutzer zur Korrektur des lonosphäreneinflusses bereitgestellt werden.

Auf Basis dieser Funktionsparameter 10 wird anschließend die Verteilungsfunktion, hier die Chapman-Funktion, ausgewertet. So kann aus den Funktionsparametern 10 mittels der Chapman-Funktion eine vierdimensionale Verteilung 11 der Elektronen geschätzt werden.

Durch Integration entlang der Höhe kann anschließend auf Basis der vierdimensionalen Verteilung 11 der Elektronen der Gesamtelektroneninhalt (TEC) 12 berechnet und in Abhängigkeit der geodätischen Länge, geodätischen Breite und der Zeit angegeben werden. Dieser TEC kann einem GNSS Nutzer zur Korrektur des lonosphäreneinflusses bereitgestellt werden.

Abhängig von der verfügbaren Bandbreite und Übertragungstechnik sind auf Basis dieses Models damit folgende Korrekturübertragungen an den Nutzer denkbar:
- Übertragung der Modellkoeffizienten 9 und/oder
- Übertragung der Funktionsparameter 10 und/oder
- Übertragung des TEC 12

Die vorgestellte Lösung erlaubt insbesondere die folgenden Vorteile:
- Datenlücken zwischen ortsfesten Referenzstationen mit Zweifrequenz-Signalempfängern können durch eine dichte Abdeckung mit bewegbaren Zweifrequenz-Signalempfängern verringert werden.
- Die Sensitivität der mittels der Empfänger ermittelten Parameter auf ein Modell, wie etwa ein 4-D Atmosphären- bzw. 4-D nosphärenmodell, kann durch Zweifrequenz-Signalempfänger, die zusätzlich zu den ortsfesten Referenzstationen vorgesehen sind und die im Betrieb (nahezu) ständig ihre Position wechseln, verbessert werden.

Fig. 3 verdeutlicht das Problem des klassischen sog. Single-Layer TEC Modells. Hier ist ein Signallaufweg 17 von einem Signal gezeigt, welches von einem Satelliten 18 ausgesendet und von einem Empfänger 19 auf der Erde 20 empfangen wird. Es findet die Annahme statt, dass alle Elektronen in der infinitesimal dünnen Höhenlinie 21 (sog. Single-Layer) konzentriert sind, so dass eine Umrechnung des schrägen TEC in den vertikalen TEC an die Position 22 durchgeführt werden kann. Zu erkennen ist, dass der Signallaufweg diese Höhenlinie 21 an einer bestimmten geodätischen Position 22 schneidet, die von der Position des Empfängers 19 abweicht. Die Höhenabhängigkeit bleibt durch den Single-Layer Ansatz unberücksichtigt, so dass keine Rückschlüsse auf die vertikale Elektronendichteverteilung möglich sind.

## Patentansprüche

1. Verfahren zur Bestimmung eines vierdimensionalen lonosphärenmodells einer Elektronenverteilung in der Erdatmosphäre, welche dazu genutzt wird, Laufzeitmessungen von Signalen, die von Satelliten ausgesendet werden, für Positionsbestimmungen mit Signalempfängern zu korrigieren, aufweisend zumindest folgende Schritte:
a) Festlegen mindestens einer auf mindestens einem Funktionsparameter basierenden Verteilungsfunktion, die dazu geeignet ist, eine Verteilung von Elektronen über die Höhe der Erdatmosphäre zu beschreiben,
b) Empfangen von Daten aus einer Mehrzahl von Laufzeitmessungen mit einer Mehrzahl von bewegbaren Zweifrequenz-Signalempfängern, um Parameter zu ermitteln, die für eine Gesamtmenge von Elektronen entlang eines Signallaufwegs von einem Satelliten zu einem Zweifrequenz-Signalempfänger repräsentativ sind,
c) Ermitteln von ort- und zeitabhängigen Funktionsparametern für die Verteilungsfunktion zumindest mit den Parametern,
d) Bereitstellen der in Schritt c) ermittelten Funktionsparameter als ein vierdimensionales lonosphärenmodell;
**dadurch gekennzeichnet, dass** die in Schritt b) verwendeten bewegbaren Zweifrequenz-Signalempfänger in oder an Fahrzeugen angeordnet sind.

2. Verfahren nach Anspruch 1, wobei in Schritt a) als Verteilungsfunktion zumindest eine Chapman-Funktion oder eine Epstein-Funktion verwendet wird.

3. Verfahren nach Anspruch 1 oder 2, wobei in Schritt b) zusätzlich Parameter aus einer Mehrzahl von Laufzeitmessungen mit einer Mehrzahl von stationären Zweifrequenz-Signalempfängern empfangen werden, wobei diese stationären Zweifrequenz-Signalempfänger in ortsfesten Messstationen angeordnet sind.

4. Verfahren nach einem der vorhergehenden Ansprüche, wobei in den Schritten c) jeweils eine aktuelle Position der bewegbaren Zweifrequenz-Signalempfänger berücksichtigt wird.

5. Verfahren nach einem der vorhergehenden Ansprüche, wobei in Schritt c) orts- und zeitabhängige Funktionsparameter der Verteilungsfunktion als Lösung eines Gleichungssystems ermittelt werden, welches mit Hilfe der in Schritt b) ermittelten Parameter aufgestellt wird.

6. Verfahren nach einem der vorhergehenden Ansprüche, wobei in einem Schritt e) mit dem vierdimensionalen lonosphärenmodell Korrekturdaten ermittelt werden, die einer Mehrzahl von Einfrequenz-Signalempfängern zur Korrektur von Positionsdaten bereitgestellt werden.

7. Verfahren nach einem der vorhergehenden Ansprüche, wobei in einem Schritt e) mit dem vierdimensionalen lonosphärenmodell Integritätsparameter ermittelt werden, die einer Mehrzahl von Zweifrequenz- und/oder Einfrequenz-Signalempfängern als Integritätsmaß bereitgestellt werden.

8. Verwendung von bewegbaren Zweifrequenz-Signalempfängern zur Bestimmung eines vierdimensionalen lonosphärenmodells einer Elektronenverteilung in der Erdatmosphäre, wobei durch die bewegbaren Zweifrequenz-Signalempfänger Laufzeitmessungen von Signalen, die von Satelliten ausgesendet werden, bereitgestellt werden, **dadurch gekennzeichnet, dass** die bewegbaren Zweifrequenz-Signalempfänger in oder an Fahrzeugen angeordnet sind.

9. Vorrichtung, welche eingerichtet ist, das Verfahren gemäß einem der Ansprüche 1 bis 7 zur Bestimmung eines vierdimensionalen lonosphärenmodells einer Elektronenverteilung in der Erdatmosphäre auszuführen.

10. Computerprogramm, umfassend Befehle, die bei der Ausführung des Programms durch einen Computer diesen veranlassen, alle Schritte des Verfahrens nach einem der Ansprüche 1 bis 7 auszuführen.

11. Maschinenlesbares Speichermedium, auf dem das Computerprogramm nach Anspruch 10 gespeichert ist.

## Claims

1. Method for determining a four-dimensional ionospheric model of an electron distribution in the Earth's atmosphere, which is used to correct time-of-flight measurements of signals that are transmitted by satellites for determining positions with signal receivers, comprising at least the following steps:
a) establishing at least one distribution function which is based on at least one function parameter and is suitable for describing a distribution of electrons as a function of height in the Earth's atmosphere,
b) receiving data from a multiplicity of time-of-flight measurements with a multiplicity of mobile dual-frequency signal receivers, in order to determine parameters which are representative of a total quantity of electrons along a signal propagation path from a satellite to a dual-frequency signal receiver,
c) determining position-dependent and time-dependent function parameters for the distribution function at least with the parameters,
d) providing the function parameters determined in step c) as a four-dimensional ionospheric model;
**characterized in that** the mobile dual-frequency signal receivers used in step b) are arranged in or on vehicles.

2. Method according to Claim 1, wherein at least a Chapman function or an Epstein function is used as the distribution function in step a).

3. Method according to Claim 1 or 2, wherein parameters from a multiplicity of time-of-flight measurements are additionally received in step b) with a multiplicity of stationary dual-frequency signal receivers, these stationary dual-frequency signal receivers being arranged in static measurement stations.

4. Method according to one of the preceding claims, wherein a current position of the mobile dual-frequency signal receivers is respectively taken into account in steps c).

5. Method according to one of the preceding claims, wherein position-dependent and time-dependent function parameters of the distribution function are determined in step c) as the solution of a system of equations which is set up with the aid of the parameters determined in step b) .

6. Method according to one of the preceding claims, wherein correction data, which are provided to a multiplicity of single-frequency signal receivers in order to correct position data, are determined in a step e) with the four-dimensional ionospheric model.

7. Method according to one of the preceding claims, wherein integrity parameters, which are provided to a multiplicity of dual-frequency and/or single-frequency signal receivers as an integrity measure, are determined in a step e) with the four-dimensional ionospheric model.

8. Use of mobile dual-frequency signal receivers in order to determine a four-dimensional ionospheric model of an electron distribution in the Earth's atmosphere, wherein time-of-flight measurements of signals that are transmitted by satellites are provided by the mobile dual-frequency signal receivers, **characterized in that** the mobile dual-frequency signal receivers are arranged in or on vehicles.

9. Device which is configured to carry out the method according to one of Claims 1 to 7 for determining a four-dimensional ionospheric model of an electron distribution in the Earth's atmosphere.

10. Computer program comprising instructions which, when the program is executed by a computer, cause the latter to carry out all steps of the method according to one of Claims 1 to 7.

11. Machine-readable storage medium on which the computer program according to Claim 10 is stored.

## Revendications

1. Procédé permettant de déterminer un modèle ionosphérique en quatre dimensions d'une distribution électronique dans l'atmosphère terrestre, qui est utilisé pour corriger des mesures de temps de propagation de signaux qui sont émis par des satellites pour des positionnements par des récepteurs de signaux, présentant au moins les étapes suivantes consistant à :
a) spécifier au moins une fonction de distribution, basée sur au moins un paramètre fonctionnel, qui est adaptée pour décrire une distribution électronique sur l'altitude de l'atmosphère terrestre,
b) recevoir des données à partir d'une pluralité de mesures de temps de propagation par une pluralité de récepteurs de signaux bifréquence mobiles afin d'établir des paramètres qui représentent une quantité totale d'électrons le long d'un trajet de signal d'un satellite à un récepteur de signaux bifréquence,
c) établir des paramètres fonctionnels dépendant du lieu et de l'heure pour la fonction de distribution au moins avec les paramètres,
d) fournir les paramètres fonctionnels établis à l'étape c) comme un modèle ionosphérique en quatre dimensions ;
**caractérisé en ce que** les récepteurs de signaux bifréquence mobiles, utilisés à l'étape b), sont disposés dans ou sur des véhicules.

2. Procédé selon la revendication 1, dans lequel à l'étape a), au moins une fonction de Chapman ou une fonction d'Epstein est utilisée comme fonction de distribution.

3. Procédé selon la revendication 1 ou 2, dans lequel à l'étape b), en outre des paramètres d'une pluralité de mesures de temps de propagation sont reçus par une pluralité de récepteurs de signaux bifréquence stationnaires, ces récepteurs de signaux bifréquence stationnaires étant disposés dans des stations de mesure fixes.

4. Procédé selon l'une quelconque des revendications précédentes, dans lequel une position actuelle des récepteurs de signaux bifréquence mobiles est prise en compte respectivement à l'étape c).

5. Procédé selon l'une quelconque des revendications précédentes, dans lequel à l'étape c), des paramètres fonctionnels, dépendant du lieu et de l'heure, de la fonction de distribution sont établis comme une solution à un système d'équations qui est énoncé à l'aide des paramètres établis à l'étape b).

6. Procédé selon l'une quelconque des revendications précédentes, dans lequel à une étape e), des données de correction sont établies à l'aide du modèle ionosphérique en quatre dimensions et fournies à une pluralité de récepteurs de signaux monofréquence pour corriger des données de position.

7. Procédé selon l'une quelconque des revendications précédentes, dans lequel à une étape e), des paramètres d'intégrité sont établis à l'aide du modèle ionosphérique en quatre dimensions et fournis à une pluralité de récepteurs de signaux bifréquence et/ou monofréquence comme une mesure d'intégrité.

8. Utilisation de récepteurs de signaux bifréquence mobiles pour déterminer un modèle ionosphérique en quatre dimensions d'une distribution électronique dans l'atmosphère terrestre, les récepteurs de signaux bifréquence mobiles fournissant des mesures de temps de propagation de signaux qui sont émis par des satellites, **caractérisée en ce que** les récepteurs de signaux bifréquence mobiles sont disposés dans ou sur des véhicules.

9. Dispositif, qui est aménagé pour exécuter le procédé selon l'une quelconque des revendications 1 à 7 pour déterminer un modèle ionosphérique en quatre dimensions d'une distribution électronique dans l'atmosphère terrestre.

10. Programme informatique, comprenant des instructions qui, à l'exécution du programme par un ordinateur, ont pour effet que celui-ci exécute toutes les étapes du procédé selon l'une quelconque des revendications 1 à 7.

11. Support de stockage lisible par machine, sur lequel est stocké le programme informatique selon la revendication 10.
